Europäisches Patentamt

European Patent Office

Office européen des brevets

(11) Veröffentlichungsnummer: **0 236 846 B1**

(12) # EUROPÄISCHE PATENTSCHRIFT

(45) Veröffentlichungstag der Patentschrift:
02.01.91 Patentblatt 91/01

(51) Int. Cl.⁵: **G06K 13/08**

(21) Anmeldenummer: **87102635.7**

(22) Anmeldetag: **25.02.87**

(54) Ver- und Entriegelungseinrichtung für einen Kartenleser.

(30) Priorität: 28.02.86 DE 3606616

(43) Veröffentlichungstag der Anmeldung:
16.09.87 Patentblatt 87/38

(45) Bekanntmachung des Hinweises auf die
Patenterteilung:
02.01.91 Patentblatt 91/01

(84) Benannte Vertragsstaaten:
AT BE CH DE ES FR GB GR IT LI NL SE

(56) Entgegenhaltungen:
WO-A-85/04970
GB-A- 1 387 108

(73) Patentinhaber: Siemens Aktiengesellschaft
Wittelsbacherplatz 2
D-8000 München 2 (DE)

(72) Erfinder: Bogenhauser, Stephan, Dipl.-Ing.
Leitershofer Strasse 14
D-8901 Stadtbergen (DE)

**Beschreibung**

Die vorliegende Erfindung betrifft eine Ver- und Entriegelungseinrichtung für eine in einen Kartenleser einschiebbare Karte, wobei die Karte durch einen Aufnahmeschlitz dem Kartenleser zugeführt, von einem in den Aufnahmeschlitz ragenden, bewegbaren Sperrelement hintergriffen, und durch Federkraft wieder ausgestoßen wird.

Derartige Kartenleser sind in verschiedenen Ausführungsformen bekannt. Die Karte wird in ein sogenanntes Lesemodul eingeführt, in dem sich die zur elektrischen Kontaktierung der Karte nötigen Elemente befinden. Der zu diesem Zweck im Lesemodul vorhandene Aufnahmeschacht entspricht der Größe der Karte derart, daß die Karte nur in Einschub- und Entnahmerichtung bewegt werden kann. Somit ist eine exakte Lage der Kontaktflächen auf der Karte zu den Kontaktelementen im Lesemodul gesichert, wenn die Karte bis an das Ende des Aufnahmeschachtes eingeführt ist. Bei dieser einfachen Ausführungsform eines Kartenlesers müssen zur elektrischen Kontaktierung Schleifkontakte verwendet werden, die aber einer unerwünschten Verschmutzung und Abnützung unterliegen und die Lebensdauer und Zuverlässigkeit des Kartenlesers gering halten.

Bei der bekannten Ausführungsform (DE-OS 34 42 397) ist das Lesemodul als Schlitten innerhalb einer feststehenden Aufnahmevorrichtung ausgeführt. Der Schlitten ist dabei in Einschub- und Entnahmerichtung der Karte verschiebbar. Die Kontaktelemente bei dieser Ausführungsform sind Druckkontakte, die erst dann auf die Kontaktflächen der Karte drücken, wenn die Karte soweit in den Kartenleser eingeführt worden ist, daß der Schlitten kurz vor seinem hinteren Anschlagpunkt angelangt ist. Der Schlitten wird durch Federkraft wieder in den Ruhezustand zurückgeholt, sobald kein Einschubdruck auf die Karte ausgeübt wird.

Um einen Lesevorgang auch ohne ständiges Eindrücken der Karte in den Kartenleser zu ermöglichen, kann der Schlitten in der Lesestellung, also kurz vor dem hinteren Anschlagpunkt, mechanisch mittels einer Herzkurvensteuerung oder elektrisch mittels eines Elektromagneten arretiert werden. Bei einer Herzkurvensteuerung erfolgt die Entriegelung und damit die Freigabe des unter Federkraft stehenden Schlittens durch erneuten Druck auf die Karte in Einschubrichtung.

Bei Kartenlesern mit Schlittenarretierung ist es jedoch von Nachteil, daß die Karte aus dem arretierten Schlitten im Lesezustand herausziehbar ist. Bei dieser Art der Entnahme gleiten die empfindlichen Kontaktelemente über die Karte, werden beschädigt und machen den Kartenleser unbrauchbar.

Zur Vermeidung des letztgenannten Nachteils ist bereits vorgeschlagen worden (P 35 18 247.4), daß unter Verwendung eines Kartenlesers ohne Schlittenarretierung ein hakenförmiges Sperrglied die eingeschobene Karte zumindest teilweise hintergreift, sobald sie die für den Lesezustand nötige Eindringtiefe im Kartenleser erreicht hat. Eine zerstörungsfreie Entnahme der Karte ist nur durch Betätigen des Entriegelmechanismusses für das Sperrglied zu erreichen.

Bei den erwähnten Kartenlesern wird der Zeitpunkt der Kartenentnahme vom Benutzer bestimmt. Somit ist die Gefahr gegeben, daß die Karte dem Kartenleser entnommen wird, obwohl die mit dem Kartenleser in Verbindung stehende Steuerung die Karte weiterhin benötigt, da z. B. noch nicht alle nötigen Daten ausgelesen, oder bei Kartenlesern mit Schreibmöglichkeit die Informationen noch nicht vollständig auf der Karte hinterlegt worden sind.

Aufgabe der vorliegenden Erfindung ist es daher, bei einem Kartenleser ohne Schlittenarretierung die Ver- und Entriegelungseinrichtung für Karten dahingehend zu verbessern, daß das hintergreifende Sperrglied eine eingeschobene Karte solange im Kartenleser hält, wie die mit dem Kartenleser verbundene Steuerung einen Aktivierungszustand erkennen läßt und daß nach Beendigung dieses Aktivierungszustandes die Karte aus dem Kartenleser ausgestoßen wird.

Diese Aufgabe wird gemäß der Erfindung durch die im kennzeichnenden Teil des Anspruchs 1 angegebenen Merkmale gelöst.

Bei einer derartigen Ausführungsform ist mit geringem mechanischem Aufwand eine Kartenlesereinheit gegeben, die das Bauvolumen des eigentlichen Kartenlesers nur unwesentlich überschreitet. Die erfindungsgemäße Ver- und Entriegelungseinrichtung verhindert praktisch eine Fehlbedienung durch den Benutzer und damit auch eine mechanische Beschädigung des Kartenlesers. Da das Freigeben der Karte ohne Eingriff des Benutzers erfolgt, bedeutet dies für den Benutzer außerdem einen erhöhten Komfort.

Vorteilhafte Ausbildungen der Erfindung ergeben sich aus den Unteransprüchen.

Die Erfindung wird im folgenden anhand eines Ausführungsbeispieles erläutert.

Dabei zeigen :

Fig. 1 eine Seitenansicht der Kartenlesereinheit, bestehend aus Ver- und Entriegelungseinrichtung und dem Kartenleser ;

Fig. 2 eine Aufsicht der Kartenlesereinheit nach Fig. 1.

Fig. 3A eine Aufsicht des Hebelwerkes in Ruhelage,

Fig. 3B eine Aufsicht des Hebelwerkes im Verriegelungszustand und

Fig. 3C eine Aufsicht des Hebelwerkes im Freigabezustand.

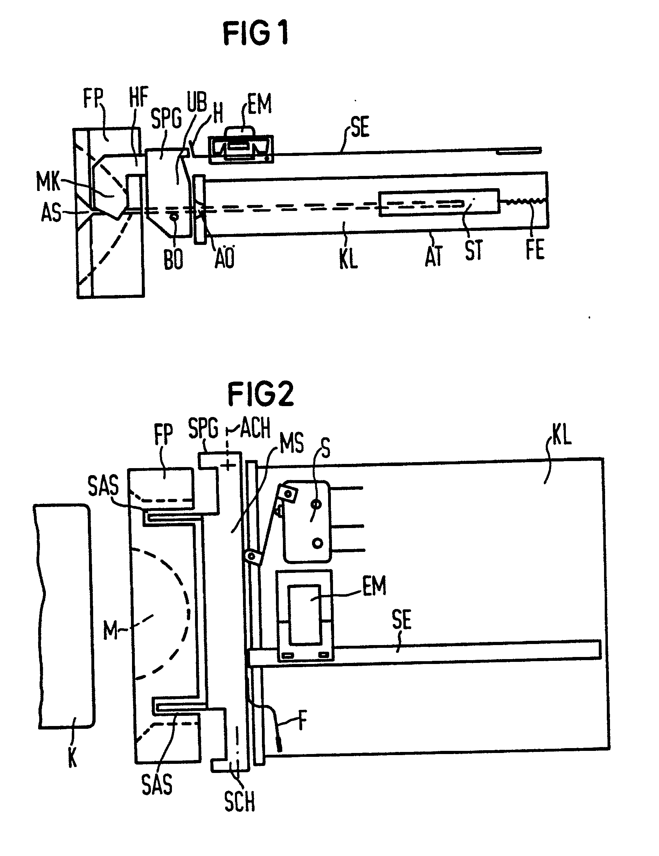

Die in Fig. 1 und 2 dargestellte Kartenlesereinheit besteht aus einem Kartenleser KL, einem kippbaren Sperrglied SPG und einer Frontplatte FP. Der Kartenleser KL setzt sich dabei zusammen aus einem feststehenden Aufnahmeteil AT sowie einem eine Karte K aufnehmenden Schlitten ST, der gegen die Kraft einer Feder FE längs verschiebbar im feststehenden Aufnahmeteil AT geführt ist und die zum Lesen der Karte K erforderlichen Kontakteinrichtungen enthält.

Vor der die Aufnahmeöffnung AÖ für die Karte K aufweisenden Stirnseite des Kartenlesers KL ist die Frontplatte FP befestigt. In der Frontplatte FP befindet sich ein Aufnahmeschlitz AS, durch den die Karte K dem Kartenleser KL exakt zugeführt werden kann. Etwa im mittleren Bereich des Aufnahmeschlitzes AS ist in der Frontplatte FP eine Mulde M vorgesehen, die dazu dient, die Karte K in den Kartenleser KL soweit einzuschieben, bis sie von dem kippbaren Sperrglied SPG hintergriffen werden kann.

Zwischen dem Kartenleser KL und der Frontplatte FP ist das kippbare Sperrglied SPG angeordnet. Es setzt sich im wesentlichen aus einem U-förmigen Bügel UB und aus zwei formgleichen messerähnlichen Klingen MK zusammen. Der Mittelsteg MS des U-förmigen Bügels UB verläuft dabei parallel zum Aufnahmeschlitz und senkrecht zur Einschubrichtung der Karte zwischen dem Kartenleser und der Frontplatte FP. Die Schenkel SCH des U-förmigen Bügels UB stehen im rechten Winkel zum Mittelsteg MS und sind zu beiden Seiten des Kartenlesers KL angeordnet. Die Schenkel SCH dienen zur Fixierung des U-förmigen Bügels UB am Kartenleser KL derart, daß eine Kippbewegung des U-förmigen Bügels UB an einer durch seine beiden Schenkel SCH parallel zum Mittelsteg MS verlaufenden Achse ACH möglich ist. Zu diesem Zweck weist jeder Schenkel SCH eine Bohrung BO zur Aufnahme eines den Schenkel SCH mit einer Halterung verbindenden Achsstiftes auf. Die Bohrungen BO liegen ungefähr in Höhe der Aufnahmeöffnung des Kartenlesers.

Die beiden messerähnlichen Klingen MK des kippbaren Sperrgliedes SPG sind über einen Hakenfortsatz HF mit dem Mittelsteg MS des U-förmigen Bügels UB verbunden. Die Klingenflächen sind dabei senkrecht zum Mittelsteg MS des U-förmigen Bügels UB ausgerichtet, die Schäfte der messerähnlichen Klingen MK verlaufen parallel zu den Schenkeln SCH des U-förmigen Bügels UB. Dabei weist die aus zwei keilförmig zulaufenden Schrägen gebildete Schneide der messerähnlichen Klinge MK in den Aufnahmeschlitz AS. Die Steigung der beiden Schrägen ist derart ausgestaltet, daß eine optimale Anpassung an die auf die Schrägen wirkende Einschub- und Auswurfkraft erreicht wird. Der Abstand der messerähnlichen Klinge MK vom U-förmigen Bügel UB wird durch die Länge des Hakenfortsatzes HF bestimmt und ist so bemessen, daß in Zusammenhang mit der Länge des Klingenschaftes und dem Abstand der Achse vom Kartenleser eine in den Kartenleser KL eingeschobene Karte K von den beiden messerähnlichen Klingen MK hintergriffen wird, während sie sich in Leseposition befindet.

Zu diesem Zweck sind in der Frontplatte FP zu beiden Seiten der Mulde M zwei senkrechte schachtartige Aussparungen SAS vorgesehen, in denen die messerähnlichen Klingen MK geführt werden.

Die Funktion der Kartenleseeinheit nach den Fig. 1 und 2 wird im folgenden erläutert. Das kippbare Sperrglied SPG durchdringt im Ruhezustand den Aufnahmeschlitz AS der Frontplatte FP mit den beiden messerähnlichen Klingen MK genau soweit, daß die keilförmig zulaufenden Schrägen noch in Höhe des Aufnahmeschlitzes AS liegen. Dadurch kann eine eingeschobene Karte die ihr zugekehrte Schräge als Anlaufschräge benützen und die messerähnlichen Klingen MK mit der Kartenvorderkante aus dem Aufnahmeschlitz AS verdrängen. Wird die Karte K dann entgegen der Federkraft des Schlittens ST weiter eingeschoben, so ist es dank der Mulde M in der Frontplatte FP möglich, daß das kippbare Sperrglied SPG mit seinen messerähnlichen Klingen MK hinter der Karte K wieder in den Aufnahmeschlitz AS hineinragen kann und somit in den Ruhezustand übergeht. Ein Federelement F sorgt dafür, daß das kippbare Sperrglied SPG wieder in den Ruhezustand, der dem Verriegelungszustand entspricht, zurückkippt. Die Karte K befindet sich nun in Leseposition, in der die Kontaktelemente des Schlittens ST auf die Karte K drücken.

Andererseits sorgt die Federkraft des Schlittens ST dafür, daß die eingeschobene Karte K wiederum die messerähnlichen Klingen MK des kippbaren Sperrgliedes SPG aus dem Aufnahmeschlitz AS verdrängen kann, in dem die hintere der keilförmigen Schrägen diesmal als Anlaufschräge dient. Die Karte K wird dann soweit aus der Frontplatte FP geschoben, daß sie bequem abgezogen werden kann.

Um nun die Karte K in Leseposition halten zu können ohne ständig einen Einschubdruck auf sie ausüben zu müssen, ist des weiteren ein Stützelement SE für das kippbare Sperrglied SPG vorgesehen.

Dieses Stützelement SE ist als streifenförmige Blattfeder ausgeführt und an dem feststehenden Aufnahmeteil AT des Kartenlesers KL derart befestigt, daß es in Einschub- und Entnahmerichtung der Karte ausgerichtet ist. Das dem Sperrglied SPG zugewandte Ende des Stützelementes SE ist mit einem Haken H versehen, der mit seiner Stirn eine zur Längsrichtung des Blockierelementes etwa senkrechte Druckfläche bildet. Das andere Ende des Stützelementes SE dient zur Befestigung desselben.

Dem Stützelement SE ist ein Elektromagnet EM so zugeordnet, daß das mit dem Haken H versehene Ende des Stützelementes SE bei Aktivierung des Elektromagneten EM aus der Ruhelage in die Stützlage herausbewegt wird, wobei sich der Haken H gegen den Mittelsteg MS des im Ruhezustand befindlichen kippbaren Sperrgliedes SPG stützt. Der Mittelsteg MS des kippbaren Sperrgliedes SPG wird nämlich beim Herausbewegen der messerähnlichen Klingen MK aus dem Aufnahmeschlitz in einem Kreisbogen, zum Kartenleser hin, um die Achse ACH des kippbaren Sperrgliedes SPG bewegt. Das Stützelement SE bildet in Stützlage eine Tangente zu diesem Kreisbogen und steht in Zusammenwirkung mit der Druckfläche des Hakens H der Kippbewegung entgegen. Allerdings gibt das Stützelement SE, bedingt durch seine Federnatur und Form der Druckfläche ab einem bestimmten Maß an Kraftaufwendung nach und verhindert somit eine Beschädigung der Mechanik im Falle einer gewaltsamen Entnahme der Karte K durch den Benutzer.

Ist die Karte K in den Kartenleser KL eingeschoben und befindet sich das kippbare Sperrglied SPG in Ruhelage, so kann durch Aktivierung des Elektromagneten EM das Stützelement SE in die Stützlage gebracht und somit die Karte K im Kartenleser KL festgehalten werden. Sie ist damit nicht mehr aus dem Kartenleser KL abziehbar und verbleibt im Kartenleser KL, solange der Elektromagnet EM aktiviert ist. Wird die Aktivierung beendet, geht damit das Stützelement SE, bedingt durch die Federeigenschaft, in die Ruhelage zurück, die Karte K kann das kippbare Sperrglied SPG aus dem Aufnahmeschlitz AS verdrängen. Bei Versorgungsspannungsausfall kann also keine Karte K im Leser festgehalten werden.

Um den Zustand der Ver- und Entriegelungseinrichtung elektrisch abfragbar zu machen, und da insbesondere eine Aktivierung des Elektromagneten EM nur im Verriegelungszustand des kippbaren Sperrgliedes SPG den gewünschten Effekt erzielt, ist am Kartenleser KL ein elektrischer Schaltkontakt S vorgesehen, der von dem kippbaren Sperrglied SPG betätigt wird. Der elektrische Schaltkontakt S trägt die Information darüber, ob das kippbare Sperrglied SPG sich im Verriegelungszustand befindet, oder ob es gerade von einer Karte K aus dem Aufnahmeschlitz AS verdrängt wird. Zusammen mit einem weiteren Schaltkontakt, der sich im Schlitten ST des Kartenlesers KL befindet und der zur Anzeige der Lesestellung des Schlittens ST dient, können somit vier Zustände von einer Steuerung ausgewertet werden. In manchen Anwendungsfällen kann es auch angebracht sein, durch Aktivieren des Elektromagneten bei leerem Kartenleser, das Einschieben einer Karte zu verhindern.

Um den Stromverbrauch durch den Elektromagneten EM gering zu halten, kann der Elektromagnet EM als bistabile Einheit ausgeführt sein. Es bietet sich die Funktionsweise eines bistabilen Relais an, das durch einen Stromimpuls auf eine von zwei Wicklungen in den jeweils anderen Zustand über geht, wobei ein zugeordneter Permanentmagnet dafür sorgt, daß der instabile Zustand ohne Energiezufuhr gehalten werden kann.

In einem weiteren Ausführungsbeispiel wird die streifenförmige Stützfeder durch ein Hebelwerk ersetzt, mit dessen Hilfe es ebenfalls möglich ist, die eingeschobene Karte im Kartenleser zu halten, ohne daß sich der Elektromagnet ständig in aktiviertem Zustand befinden muß.

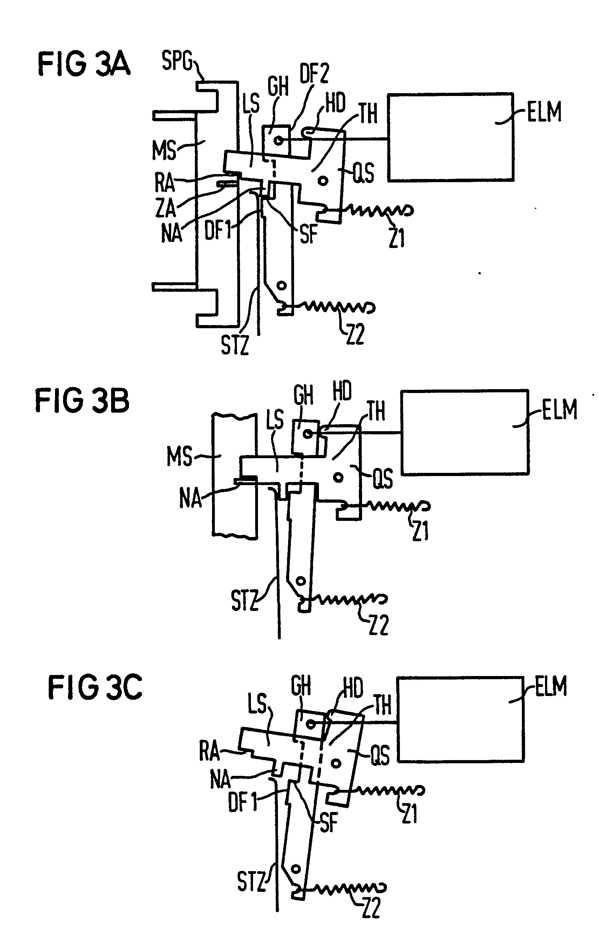

Das in Fig. 3A, 3B und 3C dargestellte Hebelwerk besteht im wesentlichen aus einem T-förmigen Hebel TH und einem geraden Hebel GH. Das Hebelwerk ist in Einschubrichtung der Karte K hinter dem kippbaren Sperrglied SPG auf der dem Mittelsteg MS zugewandten Seite am feststehenden Aufnahmeteil AT des Kartenlesers KL befestigt.

Der T-förmige Hebel TH, der einen Längssteg LS und einen sich an dessen Ende anschließenden Quersteg QS aufweist, ist im Kreuzungsbereich zwischen Längssteg LS und Quersteg QS drehbar gelagert. Die Bewegungsebene des T-förmigen Hebels TH liegt in einer Horizontalebene parallel zur Einschubrichtung der Karte K und parallel zum Mittelsteg MS des kippbaren Sperrgliedes SPG. Der T-förmige Hebel TH ist dem kippbaren Sperrglied SPG weiterhin so zugeordnet, daß sich das freie Ende des Längsstegs LS von der dem Kartenleser KL zugewandten Seite her, gegen den Mittelsteg MS des sich im Verriegelungszustand befindlichen kippbaren Sperrgliedes SPG stützen kann. Wie Fig. 3B zeigt, ist am Mittelsteg MS ein Zapfen ZA vorgesehen, in den eine rechteckförmige Ausnehmung RA an einer Ecke des Längsstegs LS eingreift. Der Längssteg LS liegt bei diesem Zustand im rechten Winkel zum Mittelsteg MS und ist durch geringfügiges Drehen in die der rechteckförmigen Ausnehmung RA gegenüberliegende Richtung so vom Zapfen ZA wegbewegbar, daß dieser beim Kippen des kippbaren Sperrgliedes SPG nicht mehr gestützt wird (siehe Fig. 3A).

Der T-förmige Hebel TH weist des weiteren in der Mitte des Längsstegs LS an der Seite der rechteckförmigen Ausnehmung RA eine Nase NA auf. Das der Nase NA gegenüberliegende Ende des Querstegs QS ist mit einer in Richtung des Längsstegs LS zeigenden halbkreisförmigen Druckfläche HD ausgebildet. Das andere Ende des Querstegs QS ist mit einer Kerbe versehen, in die eine erste Zugfeder Z1 eingreift, deren Kraftkomponente in entgegengesetzter Richtung des Längsstegs LS weist und somit das freie Ende des Längsstegs LS in Richtung zur Nase NA des kippbaren Sperrgliedes SPG zieht (siehe Fig. 3B).

Der gerade Hebel GH des Hebelwerks besteht aus einem langen und einem kurzen Arm und ist so im Drehpunkt gelagert, daß seine Bewegungsebene parallel zu der des T-förmigen Hebels TH liegt. Der gerade Hebel GH kreuzt mit seinem langen Arm den Längssteg LS des T-förmigen Hebels TH, wobei die Nase NA des Längsstegs LS zum Drehpunkt des geraden Hebels GH weist. Der lange Arm des geraden Hebels GH ist auf der dem kippbaren Sperrglied SPG zugewandten Seite mit einer in seiner Längsrichtung liegenden ersten Druckfläche DF1 und einer senkrecht zur Längsrichtung angeordneten Stützfläche SF versehen. An dieser Stützfläche SF stützt sich der Längssteg LS des T-förmigen Hebels TH mit seiner Nase NA ab. Wie Fig. 3A zeigt, greift in diesem Zustand die rechteckförmige Ausnehmung RA am Längssteg LS nicht in den Zapfen ZA des Mittelstegs MS ein. An dem langen Arm des geraden Hebels GH ist des weiteren eine zweite Druckfläche DF2 vorhanden, die sich an die halbkreisförmige Druckfläche HD des T-förmigen Hebels TH drückt (siehe Fig. 3B, 3C). Eine zweite Zugfeder Z2 greift in eine Kerbe am kurzen Arm des geraden Hebels GH ein. Die Richtung der Kraftkomponente dieser zweiten Zugfeder Z2 entspricht der der ersten Feder Z1, so daß sich der gerade Hebel GH mit seinem langen Arm von der halbkreisförmigen Druckfläche HD des T-förmigen Hebels TH wegdreht.

Dem Hebelwerk ist weiterhin ein Elektromagnet ELM mit zwei unterschiedlich starken Aktivierungszuständen zugeordnet. Über eine Zugstange, die am freien Ende des geraden Hebels GH angreift, zieht der Elektromagnet ELM mit seiner Kraftkomponente in dieselbe Richtung, wie die erste und zweite Zugfeder. Der schwache Aktivierungszustand des Elektromagneten ELM wiegt die Kraftkomponente der zweiten Zugfeder Z2 auf und dreht den langen Arm des geraden Hebels GH zur halbkreisförmigen Druckfläche HD des T-förmigen Hebels TH. Der sich abstützenden Nase NA des Längsstegs LS (siehe Fig. 3A) wird bei dieser Drehung die Stützfläche SF entzogen, so daß die erste Zugfeder Z1 den T-förmigen Hebel TH zu drehen vermag und die rechteckförmige Ausnehmung RA des Längsstegs LS in den Zapfen ZA eingreift (siehe Fig. 3B). Die Nase NA des Längsstegs LS hindert nun den geraden Hebel daran, sich wieder in die Stützlage zurückzugehen.

Der starke Aktivierungszustand des Elektromagneten ELM wiegt die Kräfte beider Zugfedern auf. Der gerade Hebel GH wird mit seiner zweiten Druckfläche DF2 derart an die halbkreisförmige Druckfläche HD des T-förmigen Hebels TH gedrückt, daß die rechteckförmige Ausnehmung RA des Längsstegs LS vom Zapfen ZA weggedreht wird. In diesem Zustand, wie aus Fig. 3C ersichtlich, stützt sich die Nase NA des Längsstegs LS an einem Stützhebel STZ ab. Dieser Stützhebel STZ ist als streifenförmige Blattfeder ausgeführt. Sie ist parallel zum geraden Hebel GH zwischen diesem und dem Mittelsteg MS angeordnet und an einem Ende fixiert. Das andere Ende weist eine Stützfläche für die Nase NA des Längsstegs LS auf.

Sobald die Aktivierung des Elektromagneten ELM beendet ist, wird der Stützhebel STZ durch die erste Druckfläche DF1 des geraden Hebels GH weggedrückt, und die Nase NA des Längsstegs LS geht dabei von der Stützfläche des Stützhebels STZ auf die Stützfläche SF des geraden Hebels GH über (siehe Fig. 3A).

Der letztgenannte Zustand entspricht der Ruhelage, in der das kippbare Sperrglied SPG nicht verriegelt ist. Nach dem Einführen der Karte K wird der Elektromagnet ELM für einen Moment in den schwachen Aktivierungszustand gebracht. Der T-förmige Hebel TH greift mit der rechteckförmigen Ausnehmung RA in den Zapfen ZA ein und verhindert ein Kippen des kippbaren Sperrgliedes SPG (siehe Fig. 3B). Ist der Lesevorgang der Karte K beendet, wird der Elektromagnet ELM für einen Moment in seinen starken Aktivierungszustand versetzt (siehe Fig. 3C), durch den das Hebelwerk anschließend wieder in die Ruhelage (siehe Fig. 3A) gebracht wird.

Im Falle eines Versorgungsspannungsausfalls während des Verriegelungszustands (Fig. 3B) kann ein Kondensator einen für den starken Aktivierungszustand des Elektromagneten ELM nötigen Stromimpuls abgeben, wodurch die Freigabe der Karte bewirkt wird.

## Ansprüche

1. Ver- und Entriegelungseinrichtung für eine in einen Kartenleser (KL) mit nicht arretierbarem Leseschlitten (ST) einschiebbare Karte (K), bei der die Karte (K) durch einen Aufnahmeschlitz (AS) dem Kartenleser (KL) zugeführt wird, dabei ein in den Aufnahmeschlitz (AS) ragendes bewegbares Sperrglied (SPG) aus dem Aufnahmeschlitz (AS) herausbewegt und die Karte in Leseposition von dem bewegbaren Sperrglied (SPG) hintergriffen wird, und die dann durch Federkraft wieder aus dem Kartenleser (KL) ausgestoßen wird, **dadurch gekennzeichnet,** daß das bewegbare Sperrglied (SPG) aus mindestens einer messerähnlichen Klinge (MK) besteht, deren Klingenfläche in Einschubrichtung der Karte (K) senkrecht zum Aufnahmeschlitz (AS) steht und deren, in den Aufnahmeschlitz (AS) hineinragende Schneide aus zwei keilförmig zulaufenden Teilschneiden gebildet ist, die als Anlaufkanten für die Vorder- oder Hinterkante der Karte (K) dienen, derart, daß das bewegbare Sperrglied (SPG) durch die Karte (K) in Einschub- und Entnahmerichtung aus dem Aufnahmeschlitz (AS) herausbewegbar ist, und daß ein Blockierelement vorgesehen ist, das nur im Verriegelungszustand des bewegbaren Sperrgliedes (SPG) aktiviert ist und dessen Kraftkomponente so gerichtet und bemessen ist, daß diese die über die Karte (K) auf das bewegbare Sperrglied (SPG) wirkende Auswurfkraft wenigstens ausgleicht.

2. Ver- und Entriegelungseinrichtung nach Anspruch 1, **dadurch gekennzeichnet,** daß das Blockierelement als Elektromagnet (EM) ausgeführt ist.

3. Ver- und Entriegelungseinrichtung nach Anspruch 1 oder 2, **dadurch gekennzeichnet**, daß ein U-förmiger Bügel (UB) vorgesehen ist, an dessen Mittelsteg (MS) die messerähnlichen Klingen (MK) angeordnet sind und daß der U-förmige Bügel (UB) derart gelagert ist, daß eine Kippbewegung an einer durch beide Schenkel (SCH) senkrecht zur Einschubrichtung und parallel zum Aufnahmeschlitz (AS) verlaufenden Achse (ACH) erfolgt.

4. Ver- und Entriegelungseinrichtung nach einem der Ansprüche 1 bis 3, **dadurch gekennzeichnet**, daß ein Stützelement (SE) aus einer an einem Ende fixierten streifenförmigen Blattfeder besteht, die dem kippbaren Sperrglied (SPG) so zugeordnet ist, daß sie in Einschubrichtung tangential zu dem bei der Kippbewegung um die Achse vom Mittelsteg (MS) ausgeführten Kreisbogen angeordnet ist und sich mit einer Druckfläche von der dem Kartenleser (KL) zugewandten Seite her gegen den Mittelsteg des sich im Verriegelungszustand befindlichen kippbaren Sperrgliedes (SPG) derart stützt, daß es die über die Karte (K) auf das kippbare Sperrglied wirkende Auswurfkraft wenigstens ausgleicht.

5. Ver- und Entriegelungseinrichtung nach den Ansprüchen 2 bis 4, **dadurch gekennzeichnet**, daß dem Stützelement (SE) der Elektromagnet (EM) zugeordnet ist, der während seiner Aktivierung das Stützelement (SE) aus der Ruhelage herausbewegt und in der Stützlage fixiert.

6. Ver- und Entriegelungseinrichtung nach Anspruch 5, **dadurch gekennzeichnetm**, daß dem Elektromagneten (EM) ein Permanentmagnet zugeordnet ist, der das Stützelement (SE) in der Stützlage fixiert.

7. Ver- und Entriegelungseinrichtung nach Anspruch 1, **dadurch gekennzeichnet**, daß sich der Aufnahmeschlitz (AS) in einer Frontplatte (FP) befindet, daß an deren Außenseite eine Mulde (M) in der Mitte des Aufnahmeschlitzes (AS) vorgesehen ist und daß das kippbare Sperrglied (SPG) zwei messerähnliche Klingen (MK) aufweist, die zu beiden Seiten der Mulde (M) in senkrechten schachtartigen Aussparungen (SAS) innerhalb der Frontplatte (FP) angeordnet sind.

8. Ver- und Entriegelungseinrichtung nach einem der Ansprüche 1 bis 3, **dadurch gekennzeichnet**, daß ein Stützelement aus wenigstens zwei ineinander greifenden Schwenkhebeln und wenigstens einem Stützhebel besteht, daß der erste Schwenkhebel als Ver-und Entriegelungselement für das kippbare Sperrglied (SPG) dient, daß der zweite Schwenkhebel dem ersten Schwenkhebel derart zugeordnet und mittels eines Steuerelements in drei verschiedenen Hebelstellungen so einstellbar ist, daß in einer ersten Hebelstellung der zweite Schwenkhebel den ersten Schwenkhebel sperrt, in einer zweiten Hebelstellung der zweite Schwenkhebel den ersten Schwenkhebel freigibt und der erste Schwenkhebel den zweiten Schwenkhebel sperrt und in einer dritten Hebelstellung der erste Schwenkhebel sich an dem Stützhebel abstützt.

9. Ver- und Entriegelungseinrichtung nach Anspruch 8, **dadurch gekennzeichnet**, daß das dem kippbaren Sperrglied (SPG) zugeordnete Stützelement (SE) aus einer Kombination folgender Elemente besteht :

a) aus einem T-förmigen Hebel (TH), der einen Längssteg (LS) und einen sich an dessen Ende anschließenden Quersteg (QS) aufweist und der im Kreuzungsbereich zwischen Längs- und Quersteg in einer Horizontalebene drehbar gelagert und dem kippbaren Sperrglied (SPG) so zugeordnet ist, daß sich das freie Ende des Längsstegs von der dem Kartenleser (KL) zugewandten Seite her gegen einen Mittelsteg (MS) des sich im Verriegelungszustand befindlichen kippbaren Sperrgliedes so abstützt, daß es die über die Karte (K) auf das kippbare Sperrglied (SPG) wirkende Kraft wenigstens ausgleicht,

b) aus einem geraden Hebel (GH), der an einem Ende in einer zur Horizontalebene des T-förmigen Hebels (TH) parallelen Ebene drehbar gelagert und dem T-förmigen Hebel so zugeordnet ist, daß sich der gerade Hebel mit dem Längssteg (LS) des T-förmigen Hebels kreuzt und sich der Längssteg mit einer zum Drehpunkt des geraden Hebels gerichteten Kraftkomponente an dem geraden Hebel in dessen Längsrichtung abstützt, und daß der gerade Hebel sich an dem, vom Drehpunkt des geraden Hebels abgewandten Ende des Querstegs (QS) derart andrückt, daß sich der Längssteg (LS) des T-förmigen Hebels entgegen der zum Drehpunkt des geraden Hebels gerichteten Kraftkomponente aus der das kippbare Sperrglied (SPG) stützenden Lage dreht,

c) aus einem Elektromagneten (ELM) mit zwei unterschiedlich starken Aktivierungszuständen, der dem geraden Hebel (GH) so zugeordnet ist, daß sich im schwachen Aktivierungszustand des Elektromagneten der gerade Hebel aus der den Längssteg (LS) stützenden Lage herausbewegt und der T-förmige Hebel (TH) dann seinerseits in Stützlage übergeht, und sich im starken Aktivierungszustand der gerade Hebel an dem vom Drehpunkt des geraden Hebels abgewandten Ende des Querstegs (QS) andrückt,

d) aus einem Stützhebel (STZ), der den beiden anderen Hebeln so zugeordnet ist, daß sich im starken Aktivierungszustand des Elektromagneten (ELM) der Längssteg (LS) des T-förmigen Hebels (TH) mit der zum Drehpunkt des geraden Hebels (GH) gerichteten Kraftkomponente an dem Stützhebel abstützt, und daß der gerade Hebel den Stützhebel aus der Stützlage verdrängt und dann seinerseits den Längssteg abstützt.

## Claims

1. Locking and unlocking device or a card (K) which can be inserted into a card reader (KL) with non-lockable reading carriage (ST), in which the card (K) is fed to the card reader (KL) through a receiving slit (AS), and thereby moves a movable locking member (SPG) projecting into the receiving slit (AS) out of the receiving slit (AS) and the movable locking member (SPG) engages behind the card in reading position, and the card is then ejected out of the card reader (KL) again by means of spring force, characterized in that the movable locking member (SPG) consists of at least one knife-like blade (MK), the blade face of which is perpendicular to the receiving slit (AS) in insertion direction of the card (K) and the cutting edge of which projecting into the receiving slit (AS) is formed of two cutting edge parts running together in the form of a wedge which serve as leading edges for the front or rear edge of the card (K), in such a manner that the movable locking member (SPG) can be moved by the card (K) in insertion and removal direction out of the receiving slit (AS), and in that a blocking element which is only activated in the locked state of the movable locking member (SPG) is provided, and the force component thereof is oriented and dimensioned in such a way that it at least equalizes the ejection force acting on the movable locking member (SPG) via the card (K).

2. Locking and unlocking device according to Claim 1, characterized in that the blocking element is designed as electromagnet (EM).

3. Locking and unlocking device according to Claim 1 or 2, characterized in that a U-shaped bracket (UB) is provided, on the middle bar (MS) of which the knife-like blades (MK) are arranged, and in that the U-shaped bracket (UB) is mounted in such a way that a tilting movement is effected at an axis (ACH) extending through both legs (SCH) perpendicular to the insertion direction and parallel to the receiving slit (AS).

4. Locking and unlocking device according to one of Claims 1 to 3, characterized in that a support element (SE) consists of a strip-shaped leaf spring which is fixed at one end and is associated with the tiltable locking member (SPG) in such a way that it is arranged in insertion direction at a tangent to the circular arc executed by the middle bar (MS) about the axis during the tilting movement and supports itself with a bearing surface from the side facing the card reader (KL) against the middle bar of the tiltable locking member (SPG) in the locked state in such a way that it at least equalizes the ejection force acting on the tiltable locking member via the card (K).

5. Locking and unlocking device according to Claims 2 to 4, characterized in that associated with the support element (SE) is the electromagnet (EM) which, during its activation, moves the support element (SE) out of the rest position and fixes it in the support position.

6. Locking and unlocking device according to Claim 5, characterized in that a permanent magnet which fixes the support element (SE) in the support position is associated with the electromagnet (EM).

7. Locking and unlocking device according to Claim 1, characterized in that the receiving slit (AS) is located in a front plate (FP), in that a depression (M) is provided on the outer side thereof in the middle of the receiving slit (AS), and in that the tiltable locking member (SPG) has two knife-like blades (MK) which are arranged at either side of the depression (M) in perpendicular chute-like cut-outs (SAS) in the front plate (FP).

8. Locking and unlocking device according to one of Claims 1 to 3, characterized in that a support element consists of at least two interlocking rocking levers and at least one support lever, in that the first rocking lever serves as locking and unlocking element for the tiltable locking member (SPG), in that the second rocking lever is associated with the first rocking lever in such a way, and can be adjusted by means of a control element in three different lever positions in such a way, that the second rocking lever locks the first rocking lever in a first lever position, the second rocking lever releases the first rocking lever and the first rocking lever locks the second rocking lever in a second lever position, and the first rocking lever is supported on the support lever in a third lever position.

9. Locking and unlocking device according to Claim 8, characterized in that the support element (SE) associated with the tiltable locking member (SPG) consists of a combination of the following elements :

a) of a T-shaped lever (TH) which has a longitudinal bar (LS) and a cross-bar (QS) adjoining at one end thereof, and is rotatably mounted in a horizontal plane in the crossing region between longitudinal and cross-bar, and is associated with the tiltable locking member (SPG) in such a way that the free end of the longitudinal bar is supported, from the side facing the card reader (KL), against a middle bar (MS) of the tiltable locking member in the locked state in such a way that it at least equalizes the force acting on the tiltable locking member (SPG) via the card (K),

b) of a straight lever (GH) which is rotatably mounted at one end in a plane parallel to the horizontal plane of the T-shaped lever (TH), and is associated with the T-shaped lever in such a way that the straight lever crosses the longitudinal bar (LS) of the T-shaped lever and the longitudinal bar is supported on the straight lever, in the longitudinal direction thereof, with a force component oriented to the centre of rotation of the straight lever, and in that the straight lever presses against the end of the cross-bar (QS) facing away from the centre of rotation of the straight lever in such a way that the longitudinal bar (LS) of the T-shaped lever is rotated out of the position supporting the tiltable locking member (SPG) against the force component oriented to the centre of rotation of the straight lever,

c) of an electromagnet (ELM) having two activation states with different magnitudes, which is associated with the straight lever (GH) in such a way that in the weak activation state of the electromagnet the straight lever is moved out of the position supporting the longitudinal bar (LS) and the T-shaped lever (TH) then in turn moves into the support position, and in the strong activation state the straight lever presses against the end of the cross-bar (QS) facing away from the centre of rotation of the straight lever,

d) of a support lever (STZ) which is associated with the two other levers in such a way that in the strong activation state of the electromagnet (ELM) the longitudinal bar (LS) of the T-shaped lever (TH) is supported on the support lever with the force component oriented to the centre of rotation of the straight lever (GH), and in that the straight lever displaces the support lever from the support position and then itself supports the longitudinal bar.

## Revendications

1. Dispositif de verrouillage et de déverrouillage pour une carte (K) pouvant être insérée dans un lecteur de cartes (KL) comportant un chariot de lecture (ST), qui ne peut pas être arrêté, et dans lequel la carte (K) est envoyée à travers une fente réceptrice (AS) au lecteur de cartes (KL), un élément mobile d'arrêt (SPG), qui pénètre dans la fente réceptrice (AS), est ressorti hors de la fente réceptrice (AS) et l'élément mobile d'arrêt (SPG) s'engage derrière la carte dans la position de lecture, et la carte est ensuite à nouveau éjectée par la force d'un ressort hors du lecteur de cartes (KL), caractérisé par le fait que l'élément mobile d'arrêt (SPG) est constitué par au moins une lame en forme de couteau (MK), dont la surface s'étend dans la direction d'insertion de la carte (K) perpendiculairement à la fente réceptrice (AS) et dont le tranchant, qui pénètre dans la fente réceptrice (AS), est formé par deux couteaux partiels, qui convergent selon une forme en coin et constituent des bords d'application pour le bord avant ou le bord arrière de la carte (K) de telle sorte que l'élément mobile d'arrêt (SPG) peut être ressorti hors de la fente réceptrice (AS) par la carte (K), dans la direction d'insertion et de prélèvement, et qu'il est prévu un élément de blocage qui est activé uniquement lorsque l'élément mobile d'arrêt (SPG) est à l'état verrouillé et dont la composante de force est dirigée et dimensionnée de manière à compenser au moins la force d'éjection qui agit, par l'intermédiaire de la carte (K), sur l'élément mobile d'arrêt (SPG).

2. Dispositif de verrouillage et de déverrouillage suivant la revendication 1, caractérisé par le fait que l'élément de blocage est réalisé sous la forme d'un électroaimant (EM).

3. Dispositif de verrouillage et de déverrouillage suivant la revendication 1 ou 2, caractérisé par le fait qu'il est prévu un étrier (UB) en forme de U sur la barrette médiane (MS) duquel sont disposées les lames en forme de couteaux (MK), et que l'étrier (UB) en forme de U est tourillonné de manière à exécuter un mouvement de basculement autour d'un axe (ACH) traversant les deux branches (SCH), perpendiculaire à la direction d'insertion et parallèle à la fente réceptrice (AS).

4. Dispositif de verrouillage et de déverrouillage suivant l'une des revendications 1 à 3, caractérisé par le fait qu'un élément d'appui (SE) est constitué par un ressort à lame en forme de bande, qui est fixé à une extrémité et est associé à l'élément d'arrêt basculant (SPG) en étant disposé, dans la direction d'insertion, tangentiellement à l'arc de cercle suivi par la branche médiane (MS) lors du mouvement de basculement autour de l'axe et en prenant appui, par une surface de pression, à partir du côté tourné vers le lecteur de cartes (KL), contre la barrette médiane de l'élément d'arrêt basculant (SPG) situé dans l'état verrouillé, de telle sorte que l'élément d'appui compense au moins la force d'éjection appliquée, par l'intermédiaire de la carte (K), sur l'élément d'arrêt basculant.

5. Dispositif de verrouillage et de déverrouillage suivant les revendications 2 à 4, caractérisé par le fait qu'à l'élément d'appui (SE) est associé l'électroaimant (EM), qui, pendant son activation, dégage l'élément d'appui (SE) de sa position de repos et le bloque dans la position d'appui.

6. Dispositif de verrouillage et de déverrouillage suivant la revendication 5, caractérisé par le fait qu'à l'électroaimant (EM) est associé un aimant permanent qui fixe l'élément d'appui (SE) dans la position d'appui.

7. Dispositif de verrouillage et de déverrouillage suivant la revendication 1, caractérisé par le fait que la fente réceptrice (AS) est située dans une plaque avant (FP), que sur le côté extérieur, il est prévu une cavité (M) au centre de la fente réceptrice (AS) et que l'élément d'arrêt basculant (SPG) comporte deux lames en forme de couteaux (MK), qui sont disposées des deux côtés de la cavité (M), dans des évidements en forme de puits verticaux (SAS) à l'intérieur de la plaque avant (SP).

8. Dispositif de verrouillage et de déverrouillage suivant l'une des revendications 1 à 3, caractérisé par le fait qu'un élément d'appui est constitué par au moins deux leviers pivotants engrenant l'un dans l'autre et par au moins un levier de support, que le premier levier pivotant est utilisé comme élément de verrouillage et de déverrouillage pour l'élément d'arrêt basculant (SPG), que le second levier pivotant est associé au premier levier pivotant et est réglable à l'aide d'un levier de commande dans trois positions différentes, de telle sorte que, dans une première position du levier, le second levier pivotant bloque le premier levier pivotant, que dans une seconde position du levier, le second levier pivotant libère le premier levier pivotant et le premier levier pivotant bloque le second levier pivotant, et que, dans une troisième position du levier, le premier levier pivotant prend appui sur le levier de support.

9. Dispositif de verrouillage et de déverrouillage suivant la revendication 8, caractérisé par le fait que l'élément d'appui (SE) associé à l'élément d'arrêt basculant (SPG) est constitué par une combinaison d'éléments suivants :

a) un levier (TH) en forme de T qui possède un jambage (LS) et une barre transversale (QS) raccordée à l'extrémité du jambage et est monté rotatif dans la zone de croisement entre le jambage et la barre transversale, dans un plan horizontal, et est associé à l'élément d'arrêt basculant (SPG) de telle sorte que l'extrémité libre du jambage prend appui, à partir du côté tourné vers le lecteur de cartes (KL), contre une barrette médiane (MS) de l'élément d'arrêt basculant situé dans l'état verrouillé, de sorte que ladite extrémité compense au moins la force agissant par l'intermédiaire de la carte (K) sur l'élément d'arrêt basculant (SPG),

b) un levier rectiligne (GH), qui est monté, par une extrémité, de manière à pouvoir tourner dans un plan parallèle au plan horizontal du levier (TH) en forme de T et est associé à ce levier de telle sorte que le levier rectiligne croise le jambage (LS) du levier en forme de T et que le jambage prend appui, avec une composante de force dirigée vers le centre de rotation du levier rectiligne, contre ce dernier, dans sa direction longitudinale, et que le levier rectiligne s'applique sous pression contre l'extrémité du jambage (QS), qui est tournée à l'opposé du centre de rotation du levier rectiligne, de telle sorte que le jambage (LS) du levier en forme de T pivote à partir de la position de soutien de l'élément d'arrêt basculant (SPG), à l'encontre de la composante de force dirigée vers le centre de rotation du levier rectiligne,

c) un électroaimant (ELM) possédant deux états d'activation correspondant à des intensités différentes et qui est associé au levier rectiligne (GH) de telle sorte que, dans l'état d'activation faible de l'électroaimant, le levier rectiligne se dégage de la position de soutien du jambage (LS) et que le levier (TH) en forme de T passe alors, pour sa part, dans la position d'appui, et que dans l'état d'activation intense, le levier rectiligne s'applique contre l'extrémité du jambage (QS), qui est tournée à l'opposé du centre de rotation du levier rectiligne,

d) un levier d'appui (STZ), qui est associé aux deux autres leviers de telle sorte que, dans l'état d'activation intense de l'électroaimant (ELM), le jambage (LS) du levier (TH) en forme de T prend appui sur le levier d'appui, avec la composante de force dirigée vers le centre de rotation du levier rectiligne (GH), et que le levier rectiligne repousse le levier d'appui hors de la position d'appui et soutient ensuite pour sa part le jambage.

## FIG 1

## FIG2

FIG 3A

FIG 3B

FIG 3C